(19) **Europäisches Patentamt / European Patent Office / Office européen des brevets**

(11) **EP 3 734 096 A1**

(12) **EUROPEAN PATENT APPLICATION**
published in accordance with Art. 153(4) EPC

(43) Date of publication:
**04.11.2020 Bulletin 2020/45**

(21) Application number: **17936298.3**

(22) Date of filing: **28.12.2017**

(51) Int Cl.:
*F16C 33/12* (2006.01)    *B22F 7/00* (2006.01)
*C22C 38/00* (2006.01)    *F16C 17/00* (2006.01)
*F16C 33/14* (2006.01)

(86) International application number:
**PCT/JP2017/047315**

(87) International publication number:
**WO 2019/130566 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Hitachi Chemical Company, Ltd.**
**Chiyoda-ku,**
**Tokyo 100-6606 (JP)**

(72) Inventors:
• **KUBO Chisato**
  **Tokyo 100-6606 (JP)**
• **FUKAE Daisuke**
  **Tokyo 100-6606 (JP)**
• **MIYAZAKI Ryoichi**
  **Tokyo 100-6606 (JP)**
• **ISHIHARA Chio**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **SINTERED BEARING AND MANUFACTURING METHOD THEREFOR**

(57)    An embodiment relates to a sintered bearing that has a ratio of change in porosity of 55% or less on an inner bore surface thereof after a rotary shaft is rotated for three hours while being supported by the sintered bearing.

# FIG. 5

EP 3 734 096 A1

**Description**

TECHNICAL FIELD

The present disclosure relates to a sintered bearing, a method for manufacturing the sintered bearing, a sintered bearing device, a rotary device, and a sintered body.

BACKGROUND ART

Sintered bearings produced by the powder metallurgy technique are known as bearings that support rotary shafts. An oil-impregnated sintered bearing, which is an example of the sintered bearings, is a sliding bearing that attains a self-lubricating property by impregnating pores of a sintered body with a lubricant oil. The oil-impregnated sintered bearing is widely used in the fields of home electric appliances, OA equipment, automobiles, etc., due to the advantage that it can be used for a long time period without oiling.

Examples of the known oil-impregnated sintered bearing include a sliding bearing that has a steel back metal and an iron-based sintered alloy layer which is joined to the steel back metal concurrently with sintering and contains 10 to 30 parts by weight of copper with the balance of iron (see Patent Document 1); and an iron-based sintered bearing that has an entire composition of a sintered alloy containing, in mass ratio, 2.0 to 9.0% of Cu, 1.5 to 3.7% of C, and the balance of Fe and inevitable impurities (see Patent Document 2).

RELATED ART DOCUMENTS

PATENT DOCUMENTS

PATENT DOCUMENT 1: Japanese Unexamined Patent Application Publication No. 11-117940
PATENT DOCUMENT 2: Japanese Unexamined Patent Application Publication No. 2010-77474

SUMMARY OF THE INVENTION

PROBLEM TO BE SOLVED BY THE INVENTION

The present disclosure provides a sintered bearing that exhibits excellent life characteristics under conditions of high circumferential velocity and/or high specific bearing load, and a method for manufacturing the same. Further, the present disclosure provides a sintered bearing device and a rotary device that exhibit excellent life characteristics under conditions of high circumferential velocity and/or high specific bearing load. Furthermore, the present disclosure provides a sintered body for a sintered bearing that exhibits excellent life characteristics under conditions of high circumferential velocity and/or high specific bearing load.

MEANS OF SOLVING THE PROBLEM

Various embodiments are included in the present invention. Example embodiments are mentioned below. The present invention is not limited to the following embodiments.

An embodiment relates to a sintered bearing that has a ratio of change in porosity of 55% or less on an inner bore surface thereof after a rotary shaft is rotated for three hours while being supported by the sintered bearing.

Another embodiment relates to a sintered bearing having a metal structure that includes a metal base and a hard phase dispersed in the metal base and being harder than the metal base.

According to a preferred embodiment, a difference in hardness between the metal base and the hard phase is 290 to 650 HV.

According to a preferred embodiment, an average diameter of the hard phase is 5 to 100 $\mu$m.

According to a preferred embodiment, the metal base is an iron base including a pearlite phase and a ferrite phase.

According to a preferred embodiment, the hard phase contains a hard material, and the hard material includes at least one selected from the group consisting of molybdenum silicide, molybdenum carbide, chromium carbide, vanadium carbide, and tungsten carbide.

According to a preferred embodiment, a content of the hard phase is 6.0 to 19% by mass based on a mass of a sintered body.

According to a preferred embodiment, an area ratio of the hard phase to a cross section of a sintered body is 5 to 20%.

According to a preferred embodiment, when a total amount of a sintered body except for the hard phase is assumed to be 100% by mass, a composition of the sintered body contains 1.0 to 13% by mass of copper, 0.5 to 5.5% by mass of carbon, and the balance of iron and inevitable impurities.

According to a preferred embodiment, any one of the sintered bearings described above contains a lubricant oil.

According to a preferred embodiment, any one of the sintered bearings described above is for high circumferential velocity and/or high specific bearing load.

Another embodiment relates to a method for producing any one of the sintered bearings described above, the method including preparing a mixed powder containing a metal powder and a hard material powder; compression-molding the mixed powder to obtain a compact; and heating the compact to obtain a sintered body.

Another embodiment relates to a sintered bearing device including any one of the sintered bearings described above, and a housing that supports the sintered bearing.

Another embodiment relates to a rotary device including a rotary shaft and any one of the sintered bearings described above that supports the rotary shaft.

Another embodiment relates to a sintered bearing device including a sintered bearing and a housing that supports the sintered bearing, in which the sintered bearing has a ratio of change in porosity of 55% or less on an inner bore surface thereof after a rotary shaft is rotated for three hours while being supported by the sintered bearing.

Another embodiment relates to a rotary device including a rotary shaft and a sintered bearing that supports the rotary shaft, in which the sintered bearing has a ratio of change in porosity of 55% or less on an inner bore surface thereof after a rotary shaft is rotated for three hours.

Another embodiment relates to a sintered body used for obtaining any one of the sintered bearings described above.

EFFECTS OF THE INVENTION

According to the present disclosure, the sintered bearing is provided which exhibits excellent life characteristics under conditions of high circumferential velocity and/or high specific bearing load, and the method for manufacturing the same is also provided. Further, according to the present disclosure, the sintered bearing device and the rotary device are provided which exhibit excellent life characteristics under conditions of high circumferential velocity and/or high specific bearing load. Furthermore, according to the present disclosure, the sintered body for a sintered bearing is provided which exhibits excellent life characteristics under conditions of high circumferential velocity and/or high specific bearing load.

BRIEF DESCRIPTION OF THE DRAWINGS

FIG. 1 is a schematic diagram showing an embodiment of a sintered bearing.
FIG. 2 is a schematic diagram showing an embodiment of a cross section of an iron-based sintered body.
FIG. 3 is a schematic view showing an example of a measuring method of an inner bore surface of the sintered bearing.
FIG. 4 is an optical micrograph of the inner bore surface of the sintered bearing after rotating the rotary shaft for 3 hours in Example 1.
FIG. 5 is an optical micrograph of a cross section of a sintered body obtained in Example 1.
FIG. 6 is an optical micrograph of an inner bore surface of a sintered bearing after rotating the rotary shaft for 3 hours in Comparative Example 1.

MODE FOR CARRYING OUT THE INVENTION

Embodiments of the present invention are described below. The present invention is not limited to the following embodiments.

<Sintered Bearing A>

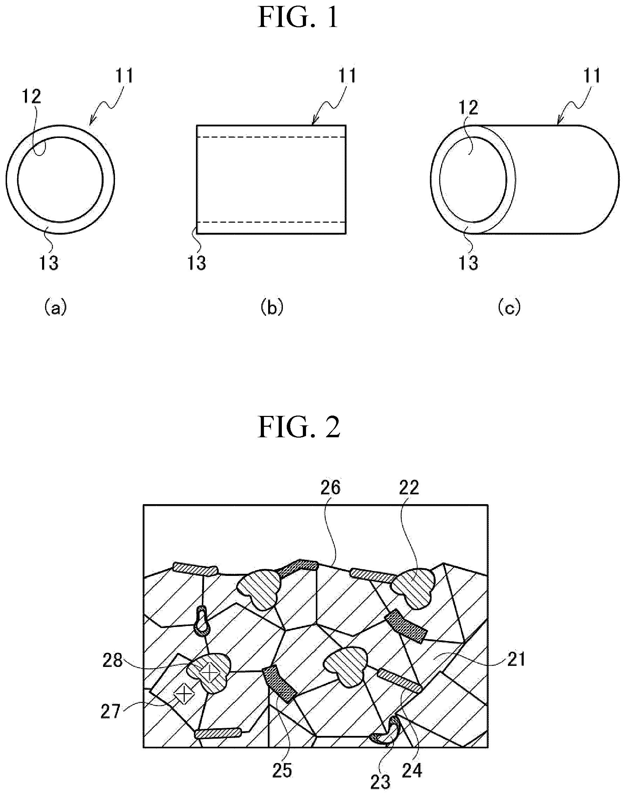

A sintered bearing A is used to support a rotary shaft. The sintered bearing A has a shape with an inner bore surface that can support the rotary shaft. In an embodiment, the shape of the sintered bearing A is a hollow cylinder. The inner bore surface of the cylinder of the sintered bearing A serves as a bearing surface. The rotary shaft is inserted and supported by an inner bore of the cylinder. FIG. 1 is a schematic diagram showing an embodiment of the sintered bearing A. Herein, (a) is a schematic front view thereof, (b) is a schematic side view thereof, and (c) is a schematic perspective view thereof. In FIG. 1, the sintered bearing is denoted by reference numeral 11; the inner bore surface is denoted by reference numeral 12; and an end surface is denoted by reference numeral 13.

[Sintered Bearing A1]

According to an embodiment, the sintered bearing A satisfies the following feature.

A ratio of change in the porosity of 55% or less on an inner bore surface thereof after a rotary shaft is rotated for three hours while being supported by the sintered bearing

Hereinafter, the sintered bearing satisfying the above-described feature may be referred to as a "sintered bearing A1". The sintered bearing A1 may include a sintered body having pores and may contain a lubricant oil in the pores.

The term "porosity on the inner bore surface" as used herein refers to the area ratio (%) of the pores on the inner bore surface. The term "the ratio of change in the porosity on the inner bore surface" as used herein refers to the ratio (%) of the porosity II(%) of the inner bore surface after the rotary shaft is rotated for three hours to the porosity I(%) of the inner bore surface before the rotary shaft is rotated. The porosity I(%) is measured by using a sintered bearing A that has not been used yet. The measurement method of the porosity on the inner bore surface is not particularly limited, and any other method may be performed as long as the method can measure the porosities I (%) and II(%), thereby determining the ratio (%) of change in the porosity from these measured values.

The ratio of change in the porosity can be determined, for example, by the following method.

[1] Porosity I of Inner Bore Surface

(1) The inner bore surface of the sintered bearing A1 is photographed with an optical microscope (epi-illumination) to obtain a color image 1a of the inner bore surface. A point of the inner bore surface that would come into contact with the rotary shaft when the rotary shaft rotates while being supported by the sintered bearing is selected as the photographed point. A mirror is used to photograph the inner bore surface. By using the mirror, the porosity on the inner bore surface can be measured without damaging the sintered bearing A1.

(2) The color image 1a is converted into a black-and-white monochrome image 1b (grayscale image) using image analysis software. A threshold value of the concentration for the black-and-white monochrome image 1b is determined such that the image can be binarized into an image with pores and other parts separated, using a concentration histogram of the black-and-white monochrome image Ib. The above-described threshold value varies depending on the used image analysis software. For example, in a case where "WinROOF" manufactured by Mitani Corporation is used as the image analysis software, a preferred threshold value is 70. The black-and-white monochrome image 1b is binarized based on the determined threshold value, thereby obtaining a binarized image 1c. Thus, the porosity 1 is determined from the binarized image 1c.

(3) By photographing three points of the inner bore surface, the porosities 1 thereof are determined in accordance with (1) and (2) described above, and then the determined porosities 1 are averaged to obtain the porosity I.

[2] Sliding

After the sintered bearing A1 is mounted in a housing, the sintered bearing A1 is made to support the rotary shaft connected to a drive unit, and the rotary shaft is rotated for three hours. At this time, the rotary shaft may be rotated while measuring the frictional coefficient from the frictional force generated between the sintered bearing A1 and the rotary shaft

The rotary shaft and the sintered bearing A1 are installed such that the axial direction of the rotary shaft becomes horizontal relative to the ground. A load in the vertical direction is applied to the housing. The specific bearing load is 1 MPa. While the specific bearing load during the rotation is measured by a load sensor, the load is adjusted so as to keep constant. As the load sensor, for example, "LC1122-K050" manufactured by A&D Company, Limited can be mentioned.

The rotary shaft used for the measurement may be a rotary shaft that is usually used together with a sintered bearing A1. Examples of the material of the rotary shaft include carbon steel, stainless steel, and the like. Carbon steel is preferred and, specifically a rotary shaft made of S45C can be used.

A surface roughness (Rmax) of the rotary shaft used for the measurement is preferably 0.8 S or less. The surface roughness thereof is for example, 0.8 S. The surface roughness thereof can be measured in accordance with JIS B 0601:1952.

A dimension difference (clearance) between the inner diameter of the sintered bearing A1 and the diameter of the rotary shaft is preferably 20 to 60 $\mu$m and more preferably 30 to 45 $\mu$m. The clearance therebetween is, for example,

40 μm.

The rotational speed of the rotary shaft is, for example, a speed selected from sliding speeds of 1 to 10 m/sec. In an embodiment, the sintered bearing A1 preferably exhibits a ratio of change in the porosity of 55% or less at a speed selected from 4 to 7 m/sec, and more preferably exhibits a ratio of change in the porosity of 55 % or less at a speed of 5 m/sec. The rotational speed of the rotary shaft is not particularly limited when actually using the sintered bearing A1.

[3] Porosity II of Inner Bore Surface

(1) After the rotary shaft is rotated for three hours, the sintered bearing A1 is taken out, and three points are selected from parts of the inner bore surface of the sintered bearing A1 that have come into contact with the rotary shaft. In the same ways as those described in the above [1](1) and (2), the porosities 2 of these points are determined using a color image 2a of the inner bore surface.
(2) In the same way as that described in the above [1](3), an average value of the porosities 2 is determined as the porosity II.

[4] Ratio of Change in the Porosity on Inner Bore Surface

The ratio of change in the porosity is determined by the following formula.

$$\text{Ratio of Change in Porosity (\%)} =$$

$$(\text{Porosity I} - \text{Porosity II})/\text{Porosity I} \times 100$$

As the optical microscope, for example, "ECLIPSE" manufactured by NIKON CORPORATION can be used. The amount of light is set to an amount of light that enables observation while distinguishing between pores included in the sintered body and other parts therein. The photographing magnification is set to, for example, 1000X.

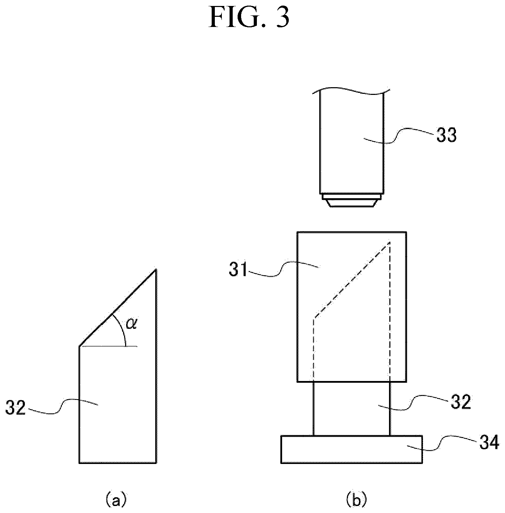

A specific photographing method is, for example, as follows. First, a cylindrical metal rod is cut at an angle of 45°C with respect to the length direction of the metal rod. A cut surface is mirror-finished with no oxide film thereon so that the surface roughness (Rz) is 50 μm or less. An angle formed between the length direction of the metal rod and an end surface of the metal rod opposite to the cut surface thereof is preferably 90°C. FIG. 3(a) is a schematic side view of the metal rod after the mirror-finishing. Herein, the metal rod is denoted by reference numeral 32. An angle α of the cut surface with respect to the length direction of the metal rod is 45°C. The material of the metal rod is not particularly limited and for example is preferably stainless steel or cemented carbide. Then, the metal rod is fixed on an experimental stand with the cut surface facing upward and the end surface opposite to the cut surface facing downward with reference to the experimental stand. Thereafter, the sintered bearing A1 is fixed by fitting the metal rod into the sintered bearing A1 such that the cut surface of the fixed metal rod is positioned inside the sintered bearing A1. FIG. 3(b) is a schematic side view showing the state of fitting the metal rod into the sintered bearing A1. Herein, the sintered bearing is denoted by reference numeral 31; the metal rod is denoted by reference numeral 32; a part of an objective lens of the optical microscope is denoted by reference numeral 33; and the experimental stand is denoted by reference numeral 34. The diameter of the metal rod may be the same as the inner diameter of the sintered bearing A1, or may be smaller than the inner diameter of the sintered bearing A1. The diameter of the metal rod is preferably smaller than the inner diameter of the sintered bearing A1, and a difference between the diameter of the metal rod and the inner diameter of the sintered bearing A1 is more preferably 50 μm or less. The objective lens of the optical microscope is moved closer to the cut surface, and a mirror image of the inner bore surface of the sintered bearing A1 reflected on the cut surface, which serves as a mirror surface, is observed and photographed.

The rotational speed may be set in accordance with applications of the sintered bearing A1. For example, in a case where the sintered bearing A1 is for a high circumferential velocity, it is preferable that the ratio of change in the porosity exhibits 55% or less at the rotational speed of 5 m/sec.

From the viewpoint of achieving excellent life characteristics under conditions of high circumferential velocity and/or high specific bearing load, the ratio of change in the porosity on the inner bore surface of the sintered bearing A1 is 55% or less, preferably 54% or less, and more preferably 53% or less. From the viewpoint of suppressing wear of the rotary shaft, the ratio of change in the porosity on the inner bore surface of the sintered bearing A1 is preferably 1% or more, more preferably 3% or more, and still more preferably 5% or more. When the ratio of change in the porosity is 55% or less, a high effect of preventing deterioration and oxidation of the surface of the sintered bearing can be obtained even though the sintered bearing is used at the high circumferential velocity. When the ratio of change in porosity is 1% or more, the sintered bearing can be effectively prevented from attacking, damaging and wearing the rotary shaft.

The sintered bearing A1 may contain a lubricant oil in the pores. According to an embodiment, the sintered body has a metal structure including at least a metal base and a hard phase dispersed in the metal base and being harder than the metal base. A detailed description is given on the sintered body having the metal structure that includes the metal base and the hard phase dispersed in the metal base and being harder than the metal base.

[Sintered Bearing A2]

According to an embodiment, the sintered bearing has a metal structure including at least a metal base, and a hard phase that is dispersed in the metal base and is harder than the metal base. Preferably, the hard phase is evenly dispersed in the metal base. Hereinafter, the sintered bearing may be referred to as a "sintered bearing A2". The sintered bearing A2 may include a sintered body having pores and may contain a lubricant oil in the pores. The sintered body has the above-described metal structure. The sintered bearing A2 preferably has the ratio of change in the porosity of 55% or less on the inner bore surface thereof after the rotary shaft is rotated for three hours while being supported by the sintered bearing A2. The details of the ratio of change in the porosity on the inner bore surface has been described above.

(Metal Structure)

The metal structure includes at least the metal base and the hard phase dispersed in the metal base and being harder than the metal base. The metal base is preferably an iron base. The iron base preferably includes a ferrite phase. Further, a copper phase and a carbon phase may be dispersed in the metal base. The carbon phase is preferably a free graphite phase. Comparison in the hardness between the metal base and the hard phase can be performed using the hard phase and another phase in contact with the hard phase, for example, a ferrite phase. FIG. 2 is a schematic diagram showing an embodiment of the cross section of the sintered body. In FIG. 2, the iron base is denoted by reference numeral 21; the hard phase is denoted by reference numeral 22; the pores are denoted by reference numeral 23; the copper phase is denoted by reference numeral 24; and the free graphite phase is denoted by reference numeral 25. The inner bore surface is denoted by reference numeral 26.

In general, sintered bearings are required to have compatibility. Because of this, a soft metal base is used for the sintered bearing. On the other hand, when using the sintered bearing under conditions of the high circumferential velocity and/or high specific bearing load, the metal base may plastically flow in some cases. When the metal base plastically flows, the sintered bearing tends to be burned. To prevent this, it is considered to increase the hardness of the metal base, but conversely, there is a concern that increasing the hardness of the metal base may enhance the aggressiveness to the rotary shaft, causing wear of the rotary shaft. For this reason, it is considered that by dispersing the hard phase in the metal base, the plastic flow of the metal base can be suppressed while keeping the aggressiveness of the sintered bearing to the rotary shaft lower. Consequently, the sintered bearing A2 exhibits excellent life characteristics when used under conditions of high circumferential velocity and/or high specific bearing load.

The hardnesses of the metal base and the hard phase can be measured, for example, by the Vickers hardness test. The Vickers hardness test may be performed in accordance with a method specified in JIS Z 2244:2009. The measurement of the hardness can be performed using the cross section of the sintered body. As the method for obtaining the cross section, a method is exemplified in which the sintered body is cut at an arbitrary position along the axial direction, and a cut surface thereof is mirror-polished and corroded with a nitar solution. Further, the measurement of the hardness can use, for example, the hard phase and a base phase in contact with the hard phase. The measurement is preferably performed by selecting points that are less influenced by pores which are cavities. FIG. 2 shows an example of a combination of measurement points. Herein, a measurement point of the metal base is denoted by reference numeral 27, and a measurement point of the hard phase is denoted by reference numeral 28. When the metal base includes a plurality of phases, including a ferrite phase, a pearlite phase, and the like, the measurement points may be selected from the hard phase and a phase having the widest cross-sectional area and included in the metal base, and thereby the hardnesses at the measurement points may be compared.

A difference in the hardness between the metal base and the hard phase can be obtained by determining differences in the Vickers hardness at five points of the sintered body (each difference in the Vickers hardness (HV) = Vickers hardness (HV) of the hard phase - Vickers hardness (HV) of the metal base) and then by averaging the determined differences in the Vickers hardness (the differences at the five points).

When the difference in the hardness between the metal base and the hard phase is 290 HV or more, the high effect of preventing the plastic flow is easily obtained. Therefore, the difference in the hardness between the metal base and the hard phase is preferably 290 HV or more, preferably 300 HV or more, and more preferably 310 HV or more. On the other hand, when the difference in the hardness between the metal base and the hard phase exceeds 650 HV, the sintered bearing A2 is more likely to attack the rotary shaft and cause the wear of the rotary shaft. Therefore, the difference in the hardness between the metal base and the hard phase is preferably 650 HV or less, preferably 640 HV or less, and more preferably 630 HV or less.

(Hard Phase)

An area ratio of the hard phase to the cross section of the sintered bearing A2 is preferably 5% or more, more preferably 7% or more, and still more preferably 9% or more. When the area ratio of the hard phase is 5% or more, good sliding properties tends to be obtained. Further, the area ratio of the hard phase to the cross section of the sintered bearing A2 is preferably 20% or less, more preferably 18% or less, and still more preferably 15% or less. When the area ratio of the hard phase is 20% or less, a sufficient effect of reducing the amount of wear can be easily obtained.

A measurement method of the area ratio of the hard phase is not particularly limited. For example, the area ratio can be measured by the following method, wherein when the sintered bearing A2 contains a lubricant oil, the measurement of the area ratio of the hard phase is performed using the sintered body obtained after removing the lubricant oil. Alternatively, the measurement can also be performed using the sintered body before it contains the lubricant oil.

(1) The sintered bearing A2 is cut at an arbitrary position along its axial direction.
(2) An elemental analysis image of the cross section of the sintered bearing A2 at the arbitrary position is obtained by an electron beam microanalyzer (e.g., "EPMA1600" manufactured by Shimadzu Corporation). The measurement is performed using a Wavelength-Dispersive Spectroscopy (WDS) system. The measuring conditions can be set as follows: for example, an acceleration voltage is 15 kV; a sample current is 100 nA; a measuring time is 5 m·sec; and an area size is $604 \times 454$ $\mu$m. The elemental analysis image can be, for example, an image with a magnification of 500X.
(3) The elemental analysis image is binarized so that the hard phase and the other parts can be distinguished and specified, and then an area ratio (%) of the hard phase is determined using an obtained binarized image. As the image analysis software used for the binarization, a commercially available software can be used. For example, "WinROOF" manufactured by Mitani Corporation can be used.

The hard phase preferably contains, as a hard material, at least one selected from the group consisting of molybdenum silicide, molybdenum carbide, chromium carbide, vanadium carbide, and tungsten carbide. In a preferred embodiment, the hard phase includes an alloy phase and the hard material dispersed in the alloy phase. The content of the hard material is preferably 4% by mass or more based on the mass of the hard phase. The upper limit of the content of the hard material is not particularly limited, and may be, for example, 100% by mass. The content of the alloy phase is preferably 96% by mass or less based on the mass of the hard phase. The lower limit of the content of the hard material is not particularly limited, and may be, for example, 0% by mass. The alloy phase is preferably an iron alloy phase. In a more preferred embodiment, the hard phase includes the iron alloy phase and a hard material dispersed in the iron alloy phase. The hard material contains at least one selected from the group consisting of molybdenum silicide, molybdenum carbide, chromium carbide, vanadium carbide, and tungsten carbide.

The content of the hard phase is preferably 6.0% by mass or more based on the mass of the sintered body. When the content of the hard phase is less than 6.0% by mass, the amount of the hard phase is so small that the effect of preventing the plastic flow becomes poor in some cases. When the content of the hard phase exceeds 19% by mass, the amount of the hard phase becomes large, and thereby the rotary shaft wears more. Thus, the content of the hard phase is preferably 19% by mass or less. Therefore, the content of the hard phase is more preferably 6.5 to 17% by mass and still more preferably 7.0 to 15% by mass.

Specific examples of the hard phase include the following.

(1) a hard phase containing, in mass ratio, 4 to 25% of Cr, 0.25 to 2.4% of C, and the balance of Fe and inevitable impurities;
(2) a hard phase containing, in mass ratio, at least one or more of 4 to 25% of Cr, 0.25 to 2.4% of C, 0.3 to 3.0% of Mo, and 0.2 to 2.2% of V, and the balance of Fe and inevitable impurities;
(3) a hard phase containing, in mass ratio, 4 to 8% of Mo, 0.5 to 3% of V, 4 to 8% of W, 2 to 6% of Cr, 0.6 to 1.2% of C, and the balance of Fe and inevitable impurities;
(4) a hard phase containing, in mass ratio, 4 to 8% of Mo, 0.5 to 3% of V, 4 to 8% of W, 2 to 6% of Cr, 0.5 to 1.5% of Si, 0.2 to 1.1% of Mn, 0.6 to 1.2% of C, and the balance of Fe and inevitable impurities;
(5) a hard phase containing, in mass ratio, 0.5 to 10% of Si, 10 to 50% of Mo, and the balance of Fe and inevitable impurities; and
(6) a hard phase containing, in mass ratio, at least one or more of 0.5 to 10% of Si, 10 to 50% of Mo, 0.5 to 10% of Cr, 0.5 to 10% of Ni, and 0.5 to 5% of Mn, and the balance of Fe and inevitable impurities.

An average diameter of the hard phase is preferably 5 μm or more, more preferably 10 μm or more, still more preferably 15 μm or more, and particularly preferably 30 μm or more. When the average diameter of the hard phase is 5 μm or more, the effect of suppressing the plastic flow of the metal base on the inner bore surface is easily obtained. The average diameter of the hard phase is preferably 150 μm or less, more preferably 140 μm or less, and still more preferably 130 μm or less. The average diameter of the hard phase of 150 μm or less is preferred from the viewpoint of suppressing the wear of the rotary shaft.

The average diameter of the hard phase can be measured by the following method.

(1) The sintered bearing A2 is cut at an arbitrary position along the axial direction, and a cut surface thereof is mirror-polished and then corroded with a nitar solution, thereby obtaining the cross section for the measurement.
(2) An arbitrary point on the cross section is photographed with an optical microscope (epi-illumination) to obtain an optical micrograph (e.g., with a magnification of 200X). The optical micrograph is subjected to image analysis using image analysis software (for example, "WinROOF" manufactured by Mitani Corporation), whereby a circle equivalent diameter of the hard phase is determined from the area of the hard phase. Any five hard phases are selected from the optical micrograph, and then the circle equivalent diameters thereof are determined and averaged to obtain an average diameter of the hard phase.

(Metal Base)

Examples of the metal base include pure iron-based base, bronze-based base, iron-carbon-based base, iron-copper-carbon-based base, iron-bronze-based base, and the like. The metal base is preferably a base in which the content of a metal contained the most exceeds 96% by mass, and more preferably a base in which the content of a metal contained the most is 99% by mass or more. The iron base is preferred because good properties for high circumferential velocity and/or high specific bearing load are available. The iron base is a base that preferably contains more than 96% by mass and more preferably 99% by mass or more of an iron element. The iron base preferably includes a ferrite phase and may further include a pearlite phase.

In an embodiment, the sintered body is an iron-based sintered body. The iron-based sintered body is preferably a sintered body containing 60% by mass or more of iron based on the mass of the sintered body. The iron-based sintered body includes at least a ferrite phase and a hard phase in contact with the ferrite phase and harder than the ferrite phase. The iron-based sintered body may further include a pearlite phase, a copper phase, and a carbon phase. In an embodiment, the iron-based sintered body includes an iron base including the ferrite phase and the pearlite phase, as well as the hard phase, the copper phase, and the carbon phase which are present while being dispersed in the iron base.

(Ferrite Phase)

The iron-based sintered body preferably includes the ferrite phase. The inclusion of the ferrite phase can prevent the wear of the rotary shaft. An area ratio of the ferrite phase to the cross section of the sintered bearing A2 is preferably 30% or more, more preferably 35% or more, and still more preferably 40% or more. When the area ratio of the ferrite phase is 30% or more, the effect of suppressing the wear of the rotary shaft tends to be easily obtained. Further, the area ratio of the ferrite phase to the cross section of the sintered bearing A2 is preferably 70% or less, more preferably 65% or less, and still more preferably 60% or less. When the area ratio of the ferrite phase is 70% or less, good sliding properties tends to be obtained. The area ratio of the ferrite phase can be measured in the same way as that for the hard phase.

(Pearlite Phase)

The iron base may include a pearlite phase. The inclusion of the pearlite phase tends to improve the strength of the sintered bearing. When the iron base includes the pearlite phase, an area ratio of the pearlite phase to the cross section of the sintered bearing A2 is preferably 5% or less. When the area ratio of the pearlite phase is 5% or less, the effect of suppressing the wear of the rotary shaft tends to be easily obtained. The area ratio of the pearlite phase may be 0%. The area ratio of the pearlite phase can be measured in the same way as that for the hard phase.

(Copper Phase)

The sintered body may include a copper phase. The inclusion of the copper phase in the sintered body tends to improve the compatibility between the sintered bearing A2 and the rotary shaft.

The copper phase is preferably dispersed appropriately in the inner bore surface of the sintered bearing A2. When the sintered body includes the copper phase, an area ratio of the copper phase to the inner bore surface is preferably 8% or more, more preferably 9% or more, and still more preferably 10% or more. When the area ratio of the copper phase is 8% or more, good compatibility between the sintered bearing A2 and the rotary shaft tends to be obtained at an initial stage of sliding. Further, the area ratio of the copper phase to the inner bore surface is preferably 40% or less, more preferably 35% or less, and still more preferably 30% or less. When the area ratio of the copper phase is 40% or less, good strength of the sintered bearing tends to be obtained. The area ratio of the copper phase can be measured in the same way as that for the porosity I of the inner bore surface.

(Carbon Phase)

The sintered body may include a carbon phase. The inclusion of the carbon phase in the sintered body tends to improve the lubricating property. The carbon phase is preferably a free graphite phase from the viewpoint of obtaining a better lubricating property.

When the sintered body includes a carbon phase, an area ratio of the carbon phase to the cross section of the sintered bearing A2 is preferably 0.5% or more, more preferably 1% or more, and still more preferably 2% or more. When the area ratio of the carbon phase is 1% or more, good strength of the material tends to be obtained. An area ratio of the carbon phase to the cross section of the sintered bearing A2 is preferably 5% or less, more preferably 4.5% or less, and still more preferably 4% or less. When the area ratio of the carbon phase is 4.5% or less, good sliding properties tends to be obtained. The area ratio of the carbon phase can be measured in the same way as that for the hard phase.

(Arbitrary Phase)

The sintered body may further include other phases. Examples of other phases include a martensite phase, a bainite phase, and the like.

(Examples of Composition)

In an embodiment, the composition of the sintered body contains 1.0 to 13% by mass of copper, 0.5 to 5.5% by mass of carbon, and the balance of iron and inevitable impurities when the total amount of the sintered body except for the hard phase is assumed to be 100% by mass. Further, when the total amount of the sintered body except for the hard phase is assumed to be 100% by mass, the composition of the sintered body preferably contains 1.5 to 11% by mass of copper, 1.0 to 4.7% by mass of carbon, and the balance of iron and inevitable impurities, and more preferably 2.0 to 9.0% by mass of copper, 1.5 to 3.7% by mass of carbon, and the balance of iron and inevitable impurities.

[Lubricant Oil]

The sintered bearing A may contain the lubricant oil in the pores. The sintered bearing A containing the lubricant oil is preferably used as the oil-impregnated sintered bearing. An appropriate type of the lubricant oil may be selected and used according to the applications of the oil-impregnated sintered bearing, the required properties therefor, and the like. Examples of the lubricant oil are classified into two main types, namely, mineral oil and synthetic oil. Examples of the mineral oil include paraffin-based mineral oils and naphthene-based mineral oils. Examples of the synthetic oil include hydrocarbon-based synthetic oils, ester-based synthetic oils, ether-based synthetic oils, and fluorine-based synthetic oils. The lubricant oil is preferably the synthetic oil, more preferably a hydrocarbon-based synthetic oil, an ester-based synthetic oil, and a fluorine-based synthetic oil, and still more preferably a fluorine-based synthetic oil.

The oil content of the lubricant oil is preferably 5% by volume or more, more preferably 7% by volume or more, and still more preferably 10% by volume or more based on the volume of the sintered bearing A from the viewpoint of obtaining the sufficient lubricating effect. Further, the oil content of the lubricant oil is preferably 25% by volume or less, more preferably 24% by volume or less, and still more preferably 23% by volume or less based on the volume of the sintered bearing A in consideration of the strength of the sintered bearing A. The oil content of the lubricant oil can be measured in accordance with JIS Z 2501:1979.

[Applications]

The applications of the sintered bearing A include various types of motors, such as fan motors for interior blowers and seat driving motors, which are installed on automobiles, and spindle motors mounted on information equipment or audio equipment. In an embodiment, the sintered bearing A is suitable for use as a bearing in which a rotary shaft rotates at high circumferential velocity and/or high specific bearing load.

<Method for Manufacturing Sintered Bearing>

According to an embodiment, a method for manufacturing the sintered bearing includes preparing mixed powder including metal powder and hard material powder; compression-molding the mixed powder to obtain a compact; and heating the compact to obtain a sintered body. The method for manufacturing the sintered bearing may further include an arbitrary step.

[Step of Preparing Mixed Powder]

The mixed powder contains at least the metal powder and the hard material powder. The metal powder is preferably iron-based powder. The mixed powder may further contain copper-based powder, carbon powder, a lubricant, inevitable impurities, and the like.

(Iron-Based Powder)

Examples of the iron-based powder include iron powder and iron alloy powder. The iron alloy powder is powder containing iron as a main component. The powder containing iron as the main component is a powder that preferably contains more than 96% by mass and more preferably 99% by mass or more of iron element based on the mass of the powder.

Examples of the method for manufacturing the iron-based powder include an ore reduction method, a water atomization method, a gas atomization method, an electrolysis method, a carbonyl method, and the like. The iron-based powder produced by the ore reduction method is preferably used because this powder can fabricate a compact with a high strength. The iron-based powder produced by the ore reduction method contains, in the powder, a trace amount of an oxide of metal, such as aluminum, silicon, magnesium, iron, titanium, or calcium, derived from the manufacturing method.

The content of the iron-based powder is preferably 60% by mass or more, more preferably 70% by mass or more, and still more preferably 80% by mass or more based on the entire mass of the mixed powder from the viewpoint of obtaining sufficient strength in the sintered bearing A. Further, the content of the iron-based powder is preferably 95% by mass or less, more preferably 90% by mass or less, and still more preferably 85% by mass or less based on the entire mass of the mixed powder from the viewpoint of achieving sufficient lubrication performance.

(Hard Material Powder)

The hard material powder is powder that can form the hard phase. The hard material powder preferably contains at least one selected from the group consisting of molybdenum silicide, molybdenum carbide, chromium carbide, vanadium carbide, and tungsten carbide. In a preferred embodiment, the hard material powder includes an alloy base and a hard material dispersed in the alloy base. The content of the hard material is preferably 4% by mass or more based on the mass of the hard material powder. The upper limit of the content of the hard material is not particularly limited, and may be, for example, 100% by mass. The content of the alloy base is preferably 96% by mass or less based on the mass of the hard material powder. The lower limit of the content of the alloy base is not particularly limited, and may be, for example, 0% by mass. The alloy base is preferably an iron alloy base. In a more preferred embodiment, the hard material powder includes the iron alloy base and a hard material dispersed in the iron alloy base. The hard material contains at least one selected from the group consisting of molybdenum silicide, molybdenum carbide, chromium carbide, vanadium carbide, and tungsten carbide.

An average particle size of the hard material powder is preferably 5 μm or more, more preferably 10 μm or more, and still more preferably 20 μm or more. The average particle size of the hard material powder is preferably 150 μm or less, more preferably 120 μm or less, and still more preferably 100 μm or less. A laser-diffraction-scattering particle size distribution meter (for example, "MT3300EX II" manufactured by MicrotracBEL Corp.) can be used for the measurement. The term average particle size as used herein refers to a median size (D50) in the particle size distribution based on the volume.

The content of the hard material powder is preferably 6.0% by mass or more, more preferably 7.0% by mass or more, and still more preferably 8.0% by mass or more based on the entire mass of the mixed powder from the viewpoint of obtaining sufficient bearing strength. Further, the content of the hard material powder is preferably 19% by mass or less, more preferably 17% by mass or less, and still more preferably 15% by mass or less based on the entire mass of the mixed powder from the viewpoint of obtaining good bearing strength.

(Copper-Based Powder)

The mixed powder may contain copper-based powder. The inclusion of the copper-based powder tends to be capable of having good compatibility between the sintered bearing and the rotary shaft. The copper-based powder is powder containing copper as a main component. The powder containing copper as the main component is a powder that preferably contains more than 50% by mass, more preferably 80% by mass or more, and still more preferably 95% by mass or more of copper element based on the mass of the copper-based powder.

The content of the copper-based powder is preferably 2.0% by mass or more, more preferably 3.0% by mass or more, and still more preferably 3.5% by mass or more based on the entire mass of the mixed powder from the viewpoint of improving the compatibility at the initial stage of sliding. The content of the copper-based powder is preferably 9.0% by mass or less, more preferably 8.0% by mass or less, and still more preferably 7.0% by mass or less based on the entire mass of the mixed powder from the viewpoint of the material strength.

(Carbon Powder)

The mixed powder may contain carbon powder. Examples of the carbon powder include graphite powder, carbon black, fullerene, and the like.

The content of the carbon powder is preferably 1.0% by mass or more, more preferably 1.5% by mass or more, and still more preferably 2.0% by mass or more based on the entire mass of the mixed powder from the viewpoint of improving the self-lubricating property. The content of the carbon powder is preferably 5.0% by mass or less, more preferably 4.5% by mass or less, and still more preferably 4.0% by mass or less based on the entire mass of the mixed powder from the viewpoint of improving the strength of the sintered bearing.

(Arbitrary Powder)

The mixed powder may further contain arbitrary powder. Examples of the arbitrary powder include metal-based powder except for those described above, metal oxides, powder lubricants, fluidity improvement agents, and the like. Among them, a powder lubricant is preferably contained in order to reduce a removal pressure of the compact after the molding.

Examples of the powder lubricant include metal soaps such as zinc stearate and calcium stearate; and amide-based lubricants such as stearamide, bis-stearamide, and ethylene bis-stearamide. One of these powder lubricants may be used alone, or two or more of the powder lubricants may be used in combination.

(Examples of Manufacturing Method and Composition)

A method for mixing powders is not particularly limited, and is, for example, a method using a mixer such as a V-type mixer or a double cone type mixer.

According to an embodiment, a preferred mixed powder has a composition containing 6.0 to 19% by mass of hard material powder; 1.0 to 13% by mass of copper-based powder; 0.5 to 5.5% by mass of carbon powder; and the balance of iron-based powder, a powder lubricant, and inevitable impurities. Preferably, the mixed powder contains 6.5 to 17% by mass of hard material powder; 1.5 to 11% by mass of copper-based powder; 1.0 to 4.7% by mass of carbon powder; and the balance of iron-based powder, a powder lubricant, and inevitable impurities. More preferably, the mixed powder contains 7.0 to 15% by mass of hard material powder; 2.0 to 9.0% by mass of copper-based powder; 1.5 to 3.7% by mass of carbon powder; and the balance of iron-based powder, a powder lubricant, and inevitable impurities.

[Molding Step]

The method for manufacturing the sintered bearing includes a step of compression-molding the mixed powder to obtain a compact. The molding can use, for example, a mold that includes a die with a mold hole, a core rod disposed in the mold hole, a lower punch slidably fitted to the mold hole of the die and an outer periphery of the core rod, and an upper punch slidably fitted to the mold hole of the die and the outer periphery of the core rod. The compression pressure is set to a pressure that can form an appropriate amount of pores in the compact in order to impregnate the pores with the lubricant oil.

In an embodiment, the molding step includes charging mixed powder containing flat copper-based powder into a cavity configured by the die with the mold hole, the core rod disposed in the mold hole, and the lower punch slidably fitted to the mold hole of the die and the outer periphery of the core rod; and then compression-molding the mixed powder by the lower punch and the upper punch slidably fitted to the mold hole of the die and the outer periphery of the core rod. The flat copper-based powder is, for example, copper foil powder.

In the molding step, instead of or together with the addition of the powder lubricant (internal lubricant) to the above-described mixed powder, a mold lubricant may be applied to the mold, thereby forming the lubrication on the mold.

[Heating Step]

The method for manufacturing the sintered bearing includes a step of heating the compact to obtain a sintered body. By heating, the powder lubricant or the like arbitrarily used is removed (degreasing step), and the sintering proceeds, thus obtaining the sintered body (sintering step).

In the sintering step, the compact is sintered to obtain the sintered body. Preferably, the compact is sintered by being heated in mixed gas of hydrogen and nitrogen. For example, in a case of obtaining an iron-based sintered body, when the sintering temperature is 1000°C or higher, the sintering proceeds, so that the sintered body can obtain sufficient strength. Further, when the sintering temperature is 1050°C or lower, the amount of pearlite phase is increased, thus making it possible to prevent the iron base from being hardened, and to prevent wear of the rotary shaft. Thus, to obtain the iron-based sintered body, the sintering temperature is preferably set to between 1000°C and 1050°C.

[Arbitrary Step]

The method for manufacturing the sintered bearing may further include other arbitrary steps. The other arbitrary steps include cooling the sintered body having a high temperature (cooling step), heating the sintered body for modification (heat treatment step), compressing the sintered body (compression step), impregnating the sintered body with the lubricant oil (oil impregnation step), and the like.

In the oil impregnation step, a vacuum impregnation method is preferably used as a method for impregnating the sintered body with the lubricant oil. As this lubricant oil, the above-described lubricant oil can be used. The viscosity index of the lubricant oil is selected as appropriate depending on the application.

<Sintered Bearing Device>

[Sintered Bearing Device A]

According to an embodiment, a sintered bearing device A includes the sintered bearing A and a housing supporting the sintered bearing A. The sintered bearing A is as described above.

[Sintered Bearing Device B]

According to an embodiment, a sintered bearing device B includes a sintered bearing and a housing supporting the sintered bearing. The above-described sintered bearing satisfies the following properties.

The sintered bearing has a ratio of change in porosity of 55% or less on an inner bore surface thereof after a rotary shaft is rotated for three hours while being supported by the sintered bearing.

The ratio of change in the porosity can be measured according to the measuring method for the sintered bearing A1 described above. The sintered bearing device B preferably includes the sintered bearing A and more preferably includes the sintered bearing A1, as the sintered bearing B.

The housing is used to fix the sintered bearing, and the shape and material of the housing are determined depending on the applications of the sintered bearing device.

<Rotary Device>

[Rotary Device A]

According to an embodiment, a rotary device includes a rotary shaft and the sintered bearing A that supports the rotary shaft. The sintered bearing A is as described above.

[Rotary Device B]

According to an embodiment, a rotary device includes a rotary shaft and a sintered bearing that supports the rotary shaft, in which the sintered bearing satisfies the following features.

The sintered bearing has a ratio of change in the porosity of 55% or less on an inner bore surface thereof after the rotary shaft is rotated for three hours.

The ratio of change in the porosity can be measured according to the measuring method for the sintered bearing A1 described above except that the rotary shaft included in the rotary device is rotated while being installed on the rotary device. That is, the rotary shaft included in the rotary device B is used as the rotary shaft when measuring the ratio of change in the porosity. The rotation can be carried out according to the specifications of the rotary device. The rotary device B preferably has the sintered bearing A and more preferably includes the sintered bearing A1, as the sintered bearing B.

The size and material of the rotary shaft are determined according to the applications of the rotary device. The rotary shaft is preferably made of metal. A smelted material is normally used in the rotary shaft. Examples of the smelted material include carbon steel and stainless steel.

EXAMPLES

The embodiments of the present invention are specifically described below by taking examples. It is noted that the embodiments of the present invention are not limited to the following examples.

<Production of Sintered Bearing>

[Example 1]

(a) The following raw material powders were used to prepare mixed powder. The average particle size of the powder was a medium size (D50) in the particle size distribution based on the volume, which was measured using a laser-diffraction-scattering particle size distribution meter.
Iron-based powder: reduced iron ore powder, average particle size of 100 $\mu$m, "DHC250" manufactured by DOWA IP CREATION CO., LTD.
Hard material powder: high-speed steel powder, average particle size of 50 $\mu$m, "PX16" manufactured by Mitsubishi Steel Mfg. Co., Ltd.
Copper-based powder: copper foil powder, average particle size of 50 $\mu$m, "Cu-S-100" manufactured by Fukuda Metal Foil & Powder Co., Ltd.
Carbon powder: natural graphite powder, average particle size of 60 $\mu$m, "LCB150" manufactured by Nippon Graphite Industries, Co.,Ltd.
Powder lubricant: zinc stearate, "Al-St" manufactured by Nitto Kasei Co., Ltd.
The above-described powders were blended so as to have a composition shown in Table 1, and mixed together by a mixer to obtain mixed powder. When the total amount of raw material powders other than zinc stearate was assumed to be 100% by mass, zinc stearate was added in an amount of 0.5% by mass with respect to 100% by mass of the raw material powder other than zinc stearate.

[Table 1]

| | Mixed powder | | | | |
|---|---|---|---|---|---|
| | Iron-based powder | Hard material powder | Copper-based powder | Carbon powder | Powder lubricant |
| | Total (1)(100% by mass) | | | | Ratio to the total (1) |
| Example 1 | Balance | 10% by mass | 5% by mass | 3% by mass | 0.5% by mass |
| Comparative Example 1 | Balance | - | 5% by mass | 3% by mass | 0.5% by mass |

(b) The mixed powder was charged into a mold and had its pressure adjusted, whereby a compact having a density of 5.75 g/cm$^3$ was obtained. The density of the compact was measured in accordance with JIS Z 2501:1979.
(c) The compact was heated at 1030°C for 0.5 hours in mixed gas of hydrogen gas and oxygen gas to obtain a hollow cylindrical sintered body.
(d) The sintered body was compressed again at the same pressure as the pressure in the above (b) process, using the same mold as that used in the above (b) process, thereby producing a sintered body of a cylinder having an outer diameter of 16.04 mm, an inner diameter of 10.02 mm, and a length of 10.00 mm. The density of the sintered body was 5.9 g/cm$^3$, and an effective porosity was 19%. The density of the sintered body was measured in accordance with JIS Z 2501:2000. The effective porosity thereof was measured in accordance with JIS Z 2506:1979.

(e) The pores of the sintered body were impregnated with a lubricant oil (refrigerant oil, viscosity index of 84) by a vacuum impregnation method to obtain a sintered bearing containing the lubricant oil in the pores. The oil content was 23% by volume. The oil content was measured in accordance with JIS Z 2501:1979.

(Properties of Sintered Bearing)

The obtained sintered bearing included an iron base including a ferrite phase and a pearlite phase; a hard phase dispersed in the iron base; a copper phase; and a free graphite phase. The properties of the sintered bearing were measured in accordance with the above description as follows.

(a) Measurement of the Ratio of Change in Porosity

(1) The inner bore surface of the sintered bearing was photographed with an optical microscope ("ECLIPSE" manufactured by NIKON CORPORATION, epi-illumination, magnification of 1000X) to obtain a color image 1a of the inner bore surface. At the time of the photographing, a light intensity scale was maximized, and a dimming filter ND16 and a color temperature change filter NCB11 were used. A point of the inner bore surface, which would come into contact with the rotary shaft when the rotary shaft is rotated while being supported in the sintered bearing, was selected as the photographed point. The photographed range was set to the field of view at a magnification of 1000X.
(2) The color image Ia was converted into a black-and-white monochrome image Ib (grayscale image) using image analysis software ("WinROOF" manufactured by Mitani Corporation). A threshold value of the concentration for the black-and-white monochrome image Ib was determined to be 0 to 70 gradations out of 255 gradations such that the image could be binarized into an image with pores and other parts separated, using a concentration histogram of the black-and-white monochrome image Ib. The black-and-white monochrome image Ib was binarized based on the determined threshold value of 0 to 70 gradations, thereby obtaining a binarized image Ic. Thus, the porosity I was determined from the binarized image Ic.
(3) The sintered bearing was press-fitted into a housing (made of brass), and then a rotary shaft mounted on a bearing tester (bearing tester: "four-station high-speed bearing tester" manufactured by CHIHODA co. ltd., rotary shaft (shaft): made of S45C with 9.980 mm in diameter × 80 mm in length) was supported by the sintered bearing. A clearance was 40 $\mu$m. The shaft and the sintered bearing were set such that the axial direction of the shaft was horizontal to the ground. A load (1 MPa) in the vertical direction was applied to the housing. The rotary shaft was rotated at room temperature (25°C) for three hours. The rotating condition was a sliding speed of 5 m/sec.
(4) The sintered bearing was taken out, whereby a color image IIa of the inner bore surface was obtained in the same way as in that in (1) described above. The photographed point was defined as a point of the inner bore surface in contact with the rotary shaft.
(5) A porosity II was determined in the same way as that in (2) described above.
(6) A ratio of change in the porosity of the inner bore surface after the rotary shaft was rotated for three hours was determined by the following formula. The ratio of change was indicated in Table 2.

$$\text{Ratio of Change in Porosity (\%)} =$$

$$(\text{Porosity I} - \text{Porosity II})/\text{Porosity I} \times 100$$

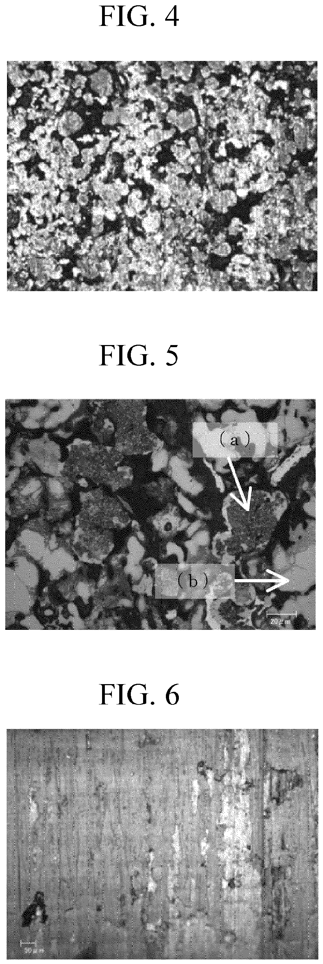

FIG. 4 shows an optical micrograph of the inner bore surface obtained after the rotation of the rotary shaft for three hours. The conditions for photographing were the same as those in (a)(1) described above.

(b) Difference in Hardness Between Iron Base and Hard Phase

A difference in the hardness between the iron base and the hard phase was measured by the Vickers hardness tester ("HM-200" manufactured by Mitutoyo Corporation). The Vickers hardness test was performed in accordance with a method specified in JIS Z 7725:2010. On the cross section of the sintered bearing, points which were less affected by pores were selected from each of a ferrite phase included in the iron base and a hard phase in contact with the ferrite phase, and then a Vickers hardness of each point was measured. Subsequently, a difference in the Vickers hardness (a difference (HV) = Vickers hardness (HV) of the hard phase - Vickers hardness (HV) of the ferrite phase) was determined. FIG. 5 is an optical micrograph of the cross section of the sintered bearing. FIG. 5 shows an example of a combination of the measurement points. The points into which an indenter was pushed were indicated by the arrows. Herein, (a) shows the hard phase, while (b) shows the ferrite phase. In the same way, differences in the Vickers hardness at five points were determined and then averaged to obtain an average value of the determined differences in the Vickers Hardness (the differences at the five points). Consequently, the average value was defined as a difference in the hardness between the iron base and the hard phase. The difference in the hardness is shown in Table 2.

[Comparative Example 1]

A sintered bearing was produced in the same way as in Example 1 except that the composition of the mixed powder was changed to the ratio shown in Table 1 described above. The properties of the obtained sintered bearing are shown in Table 2. FIG. 6 shows an optical micrograph of the inner bore surface after the rotary shaft was rotated for three hours.

[Table 2]

|  | Ratio of change in porosity | Difference in hardness |
| --- | --- | --- |
|  | (%) | (HV) |
| Example 1 | 53 | 345 |
| Comparative Example 1 | 96 | - |

<Evaluation of Life Characteristics and Wear Amount of Sintered Bearing>

[Life Characteristics]

The rotary shaft was rotated in the same way as that in (a)(3) described above, and the rotation time period (sliding time period) until the burning of the sintered bearing occurred was measured. The result is shown in Table 3. It is found that the sintered bearing having a ratio of change in the porosity of 55% or less on an inner bore surface thereof after the rotation for three hours exhibited excellent life characteristics. It is also found that the sintered bearing having a hard phase exhibited excellent life characteristics.

[Wear Amount]

The rotary shaft was rotated in the same way as that in (a)(3) described above, and the wear amount of the sintered bearing when the burning of the sintered bearing occurred was measured. The wear amount of the sintered bearing was determined to be a difference between an internal diameter before the rotary shaft was rotated and an internal diameter after the rotary shaft was supported and rotated. The result is shown in Table 3. It is found that the sintered bearing having a ratio of change in the porosity of 55% or less on the inner bore surface thereof after the rotary shaft was rotated for three hours had less amount of wear. It is also found that the sintered bearing having a hard phase had less amount of wear.

[Table 3]

|  | Sliding time period | Wear amount |
| --- | --- | --- |
|  | (h) | ($\mu$m) |
| Example 1 | 34 | 1 |
| Comparative Example 1 | 12 | 5 |

INDUSTRIAL APPLICABILITY

The sintered bearing of the embodiment is preferably used in various types of motors, such as fan motors for interior blowers and seat driving motors, which are installed on automobiles, spindle motors mounted on information equipment or audio equipment, and the like. According to the embodiment, the sintered bearing is suitable as a bearing for a rotary shaft that rotates at high circumferential velocity and/or high specific bearing load.

DESCRIPTION OF REFERENCE CHARACTERS

11      Sintered bearing
12      Inner bore surface
13      End surface
21      Iron base
22      Hard phase
23      Pore
24      Copper phase
25      Carbon phase
26      Inner bore surface
27      Measurement point of hardness
28      Measurement point of hardness
31      Sintered bearing
32      Metal rod
33      Objective lens
34      Experimental stand

## Claims

1.  A sintered bearing having a ratio of change in porosity of 55% or less on an inner bore surface thereof after a rotary shaft is rotated for three hours while being supported by the sintered bearing.

2.  A sintered bearing comprising a metal structure that includes a metal base and a hard phase dispersed in the metal base and being harder than the metal base.

3.  The sintered bearing according to claim 2, wherein a difference in hardness between the metal base and the hard phase is 290 to 650 HV.

4.  The sintered bearing according to claim 2 or 3, wherein an average diameter of the hard phase is 5 to 100 $\mu$m.

5.  The sintered bearing according to any one of claims 2 to 4, wherein the metal base is an iron base including a pearlite phase and a ferrite phase.

6.  The sintered bearing according to any one of claims 2 to 5, wherein the hard phase contains a hard material, and the hard material includes at least one selected form the group consisting of molybdenum silicide, molybdenum carbide, chromium carbide, vanadium carbide, and tungsten carbide.

7.  The sintered bearing according to any one of claims 2 to 6, wherein a content of the hard phase is 6.0 to 19% by mass based on a mass of a sintered body.

8.  The sintered bearing according to any one of claims 2 to 7, wherein an area ratio of the hard phase to a cross section of a sintered body is 5 to 20%.

9.  The sintered bearing according to any one of claims 2 to 8, wherein when a total amount of a sintered body except for the hard phase is assumed to be 100% by mass, a composition of the sintered body contains 1.0 to 13% by mass of copper, 0.5 to 5.5% by mass of carbon, and the balance of iron and inevitable impurities.

10. The sintered bearing according to any one of claims 1 to 9, wherein the sintered bearing comprises a lubricant oil.

11. The sintered bearing according to any one of claims 1 to 10, wherein the sintered bearing is for high circumferential velocity and/or high specific bearing load.

12. A method for producing the sintered bearing according to any one of claims 1 to 11, the method comprising:

    preparing a mixed powder containing a metal powder and a hard material powder;
    compression-molding the mixed powder to obtain a compact; and
    heating the compact to obtain a sintered body.

13. A sintered bearing device comprising the sintered bearing according to any one of claims 1 to 11, and a housing that supports the sintered bearing.

14. A rotary device comprising a rotary shaft and the sintered bearing according to any one of claims 1 to 11 that supports the rotary shaft.

15. A sintered bearing device comprising a sintered bearing and a housing that supports the sintered bearing, wherein the sintered bearing has a ratio of change in porosity of 55% or less on an inner bore surface thereof after a rotary shaft is rotated for three hours while being supported by the sintered bearing.

16. A rotary device comprising a rotary shaft, and a sintered bearing that supports the rotary shaft, wherein the sintered bearing has a ratio of change in porosity of 55% or less on an inner bore surface thereof after the rotary shaft is rotated for three hours.

17. A sintered body used for obtaining the sintered bearing according to any one of claims 1 to 11.

# FIG. 1

(a)

(b)

(c)

# FIG. 2

# FIG. 3

(a)  (b)

FIG. 4

FIG. 5

FIG. 6

## INTERNATIONAL SEARCH REPORT

| International application No. |
| --- |
| PCT/JP2017/047315 |

**A. CLASSIFICATION OF SUBJECT MATTER**
Int.Cl. F16C33/12(2006.01)i, B22F7/00(2006.01)i, C22C38/00(2006.01)i,
F16C17/00(2006.01)i, F16C33/14(2006.01)i

According to International Patent Classification (IPC) or to both national classification and IPC

**B. FIELDS SEARCHED**

Minimum documentation searched (classification system followed by classification symbols)
Int.Cl. F16C33/12, B22F7/00, C22C38/00, F16C17/00, F16C33/14

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 8-109450 A (HITACHI POWDERED METALS CO., LTD.)<br>30 April 1996, paragraphs [0005]-[0016]<br>(Family: none) | 2-3<br>4-14, 17<br>1, 15, 16 |
| Y | JP 60-159154 A (TOYOTA MOTOR CORPORATION) 20<br>August 1985, claims, page 3, upper left column,<br>line 2 to upper right column, line 3<br>(Family: none) | 4-14, 17 |

☒ Further documents are listed in the continuation of Box C.    ☐ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>15.03.2018 | Date of mailing of the international search report<br>03.04.2018 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2017/047315

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-320621 A (KOMATSU LTD.) 17 November 2005, paragraphs [0040], [0087]-[0090] & US 2005/0217764 A1, paragraphs [0071], [0127]-[0130] & CN 1680612 A | 5-14, 17 |
| Y | JP 2007-107034 A (HITACHI POWDERED METALS CO., LTD.) 26 April 2007, paragraph [0013] & US 2007/0081914 A1, paragraph [0020] & GB 2431166 A & GB 2446911 A & DE 102006048442 A1 & KR 10-2007-0040730 A & CN 1947896 A & CN 102172775 A | 6-14, 17 |
| A | JP 2009-74572 A (PANASONIC CORPORATION) 09 April 2009, entire text, all drawings & US 2009/0073596 A1 | 1-17 |
| A | WO 2017/199456 A1 (HITACHI CHEMICAL COMPANY, LTD.) 23 November 2017, entire text, all drawings (Family: none) | 1-17 |

Form PCT/ISA/210 (continuation of second sheet) (January 2015)

## INTERNATIONAL SEARCH REPORT

| International application No. |
|---|
| PCT/JP2017/047315 |

**Box No. II**      **Observations where certain claims were found unsearchable (Continuation of item 2 of first sheet)**

This international search report has not been established in respect of certain claims under Article 17 (2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
[see extra sheet]

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

             ☐ The additional search fees were accompanied by the applicant's protest but the applicable protest fee was not paid within the time limit specified in the invitation.

             ☒ No protest accompanied the payment of additional search fees.

Form PCT/ISA/210 (continuation of first sheet (2)) (January 2015)

**INTERNATIONAL SEARCH REPORT**

International application No.

PCT/JP2017/047315

(Continuation of Box No. III)

Document 1: JP 8-109450 A (HITACHI POWDERED METALS CO., LTD.) 30 April 1996, paragraphs [0005]-[0016]
(Family: none)

    The claims are classified into the two inventions below.

(Invention 1) Claims 1 and 10-17
    Claims 1 and 10-17 have the special technical feature wherein "the proportion of change of the porosity of the inner diameter surface observed after the rotation shaft is supported and rotated for three hours is 55% or less"; thus these claims are classified as invention 1.

(Invention 2) Claims 2-9
    Claims 2-9 have the common technical feature between these claims and claim 1 classified as invention 1 of "a sintered bearing". However, this technical feature, which does not make a contribution over the prior art in light of the disclosure of document 1 (in particular, refer to paragraphs [0005]-[0016]), cannot be said to be a special technical feature. Apart from this feature, there are not the same or corresponding special technical features between claims 2-9 and claim 1.
    Furthermore, claims 2-9 do not depend from claim 1. In addition, claims 2-9 are not substantially identical to or similarly closely related to any of the claims classified as invention 1.
    Accordingly claims 2-9 cannot be identified as invention 1.
    Meanwhile, claims 2-9 have the special technical feature of "providing a metal composition having a metal base material and a hard phase that is harder than the metal base material and is dispersed in the metal base material"; thus these claims are classified as invention 2.

Form PCT/ISA/210 (extra sheet) (January 2015)

**REFERENCES CITED IN THE DESCRIPTION**

**Patent documents cited in the description**

- JP 11117940 A
- JP 2010077474 A